# EUROPÄISCHE PATENTSCHRIFT

(11) **EP 4 051 637 B1**
(45) Veröffentlichungstag und Bekanntmachung des Hinweises auf die Patenterteilung: **28.01.2026**
(21) Anmeldenummer: 20788769.6
(22) Anmeldetag: 07.10.2020
(51) Int. Cl.: C01G 53/00, H01M 4/00

(54) **ELEKTRODENMATERIAL, VERFAHREN ZU DESSEN HERSTELLUNG UND DESSEN VERWENDUNG**
ELECTRODE MATERIAL, METHOD FOR THE PRODUCTION THEREOF, AND USE OF SAME
MATÉRIAU D'ÉLECTRODE, SON PROCÉDÉ DE PRODUCTION ET SON UTILISATION

(30) Priorität: 28.10.2019 DE 102019129070
(43) Veröffentlichungstag der Anmeldung: 07.09.2022
(73) Patentinhaber: Forschungszentrum Jülich GmbH, 52425 Jülich (DE)
(72) Erfinder: FOIT, Severin, 52441 Linnich (DE); DE HAART, L.G.J., 6291 EA Vaals (NL); VIBHU, Vaibhav, 52428 Jülich (DE); EICHEL, Rüdiger-a., 52428 Jülich (DE)
(74) Vertreter: Schwenderling, Jens
(86) Internationale Anmeldenummer: PCT/EP2020/078132
(87) Internationale Veröffentlichungsnummer: WO 2021/083624

(56) Entgegenhaltungen:
- WO-A1-2017/075429
- US-A1- 2006 255 310
- BERGER CHRISTIAN ET AL: "Synthesis and characterization of the novel K2NiF4-type oxide Pr2Ni0.9Co0.1O4+[delta]", SOLID STATE IONICS, NORTH HOLLAND PUB. COMPANY. AMSTERDAM; NL, NL, vol. 316, 4 January 2018 (2018-01-04), pages 93 - 101, XP085352791, ISSN: 0167-2738, DOI: 10.1016/J.SSI.2017.12.024
- ALEJANDRA MONTENEGRO-HERNNDEZ ET AL: "Thermal stability of LnNiO(Ln: La, Pr, Nd) and their chemical compatibility with YSZ and CGO solid electrolytes", INTERNATIONAL JOURNAL OF HYDROGEN ENERGY, ELSEVIER SCIENCE PUBLISHERS B.V., BARKING, GB, vol. 36, no. 24, 20 August 2011 (2011-08-20), pages 15704 - 15714, XP028320666, ISSN: 0360-3199, [retrieved on 20110908], DOI: 10.1016/J.IJHYDENE.2011.08.105
- V. VAIBHAV ET.AL.: "Electrochemical ageing study of mixed lanthanum/praseodymium nickelates La2-xPrxNiO4+delta as oxygen electrodes for solid oxide fuel or electrolysis cellst", JOURNAL OF ENERGY CHEMISTRY, vol. 46, 24 October 2019 (2019-10-24), pages 62 - 70, XP002801858, DOI: 10.1016/j.jechem.2019.10.012

## Beschreibung

Die Erfindung betrifft ein Elektrodenmaterial, ein Verfahren zu dessen Herstellung und dessen Verwendung für Brennstoffzellen und für die Elektrolyse, insbesondere für die Hochtemperaturelektrolyse, als Luft- oder Sauerstoffelektrode.

Elektrolyse nennt man einen Prozess, bei dem elektrischer Strom eine Redoxreaktion erzwingt. Sie wird beispielsweise zur Gewinnung von Metallen verwendet, oder zur Herstellung von Stoffen, deren Gewinnung durch rein chemische Prozesse teurer oder kaum möglich wäre. Beispiele wichtiger Elektrolysen sind die Gewinnung von Wasserstoff, Aluminium, Chlor und Natronlauge.

Eine Elektrolyse erfordert eine Gleichspannungsquelle, welche die elektrische Energie liefert und die chemischen Umsetzungen vorantreibt. Ein Teil der elektrischen Energie wird in chemische Energie umgewandelt. Genau dem umgekehrten Zweck, der Umwandlung von chemischer Energie in elektrische, dienen Batterien, Akkumulatoren oder Brennstoffzellen: sie dienen als Spannungsquelle. Elektrolysen können daher der Energiespeicherung dienen, beispielsweise bei der Elektrolyse von Wasser, die Wasserstoff und Sauerstoff ergibt, die als Energieträger vorgeschlagen wurden. Durch die Umkehrung der Wasserelektrolyse in einer Brennstoffzelle kann etwa 40 % der ursprünglich eingesetzten elektrischen Energie wieder zurückgewonnen werden.

Für die Elektrolyse von Wasser wird auch die sogenannte Hochtemperatur (Wasserdampf)-Elektrolyse (bei 700 bis 1000 °C) an Festelektrolyten eingesetzt. Als Festelektrolyt wird üblicherweise Yttrium-stabilisiertes Zirkoniumdioxid (YSZ) verwendet. Alternativ können auch Sc oder Ca-dotiertes ZrO Gd oder Sm-dotiertes CeO oder auch Elektrolyte mit Perowskit Struktur (z. B. auf Basis von LaGaO dotiert mit Sr und/oder Mg) verwendet werden. Durch die erhöhte Betriebstemperatur lässt sich die benötigte Spannung im thermoneutralen Betriebspunkt auf 1,30 V senken, die Stromdichte liegt bei 0,4 A/cm². Ferner wird der Wirkungsgrad verbessert.

Aus der WO 2008/061782 A2 sind allgemein sogenannte Luftelektroden beschrieben. Dieser Stand der Technik bezieht sich auf eine dünne und im Prinzip nicht getragene Festoxidzelle, die mindestens eine poröse Schicht, eine Elektrolytschicht und eine poröse Kathodenschicht umfasst, wobei die Anodenschicht und die Kathodenschicht ein Elektrolytmaterial, mindestens ein Metall und ein Katalysatormaterial aufweist, und wobei die Gesamtdicke der dünnen reversiblen Zelle etwa 150 um oder weniger beträgt.

Aus Berger, Christian, et al. "Synthesis and characterization of the novel K2NiF4-type oxide Pr2Ni0.9Co0.1O4+δ" in Solid State Ionics 316 (2018): 93-101 ist es bekannt, *Pr*₂*Ni*_{0.9}*Co*_{0.1}*O*_{4+*δ*} als Luftelektrode in Brennstoffzellen anzuwenden. Montenegro-Hernandez, Alejandra, et al. "Thermal stability of Ln2NiO4+ δ (Ln: La, Pr, Nd) and their chemical compatibility with YSZ and CGO solid electrolytes"in international journal of hydrogen energy 36.24 (2011): 15704-15714 offenbart verschiedene Herstellungsmethoden von *Pr*₂*NiO*_{4+*δ*} und *Nd*₂*NiO*₄₊*_{δ}.* Die Offenlegungsschrift US 2006/255310 A1 betrifft ein komplexes Oxid, das als thermoelektrisches Material vom n-Typ eine hohe Leistung erzielen kann, sowie ein thermoelektrisches Material vom n-Typ unter Verwendung des komplexen Oxids. Vibhu, Vaibhav, et al. "Electrochemical ageing study of mixed lanthanum/praseodymium nickelates La2-x PrxNiO_(4 + δ) as oxygen electrodes for solid oxide fuel or electrolysis cells" in Journal of Energy Chemistry 46 (2020): 62-70 betrifft Sauerstoffelektroden für Festoxid-Brennstoffzellen oder Elektrolysezellen.

Ebenfalls sind Perowskite für Luftelektroden bekannt, beispielsweise aus der US 7,803,348 B1. Dort wird beschrieben, dass der Sauerstoff in Gegenwart eines Katalysators an der Kathode einer Alkali-Elektrolyt-Brennstoffzelle reduziert wird. Katalysatoren der Formel *Sr*₃₋*ₓA*₁₊*ₓCo*₄₋*_{y}B_{y}O*_{10,5}*_{-z},* worin wobei die Werte für x, y und z innerhalb definierter Bereiche liegen und A für Eu, Gd, Tb, Dy, Ho oder Y und B für Fe, Ga, Cu, Ni, Mn und Cr stehen, zeigen eine hohe katalytische Aktivität und eine hohe chemische Stabilität, wenn sie als Sauerstoffreduktionskatalysator in alkalischen Brennstoffzellen verwendet werden.

Ferner sind aus dem Stand der Technik Nickelate bekannt. So beschreibt die WO 2017/214152 A1 eine Festoxid-Brennstoffzelle mit einer Anode, einem Elektrolyten, einer Kathodensperrschicht, einer Nickelat-Verbundkathode, die durch die Kathodensperrschicht vom Elektrolyten getrennt ist, und wobei eine Kathodenstrom-Kollektorschicht vorgesehen ist. Die Nickelat-Verbundkathode beinhaltet eine Nickelatverbindung und ein zweites Oxidmaterial, das ein Ionenleiter sein kann. Der Verbundwerkstoff kann ferner ein drittes Oxidmaterial umfassen. Das Verbundmaterial kann die folgende allgemeine Formel aufweisen (LnᵤMlᵥM2_{S})ₙ₊₁(Ni₁₋ₜNₜ)ₙO₃ₙ₊₁ - A₁₋ₓBₓO_{y} C_{w}D_{z}Ce_{(1-w-z)}O_{2-δ},wobei A und B Seltenerdmetalle mit Ausnahme von Cer sein können.

Schließlich sind aus der US 2012/0064433 Lanthan-Cobalt-Nickelate zur Verwendung in Festoxidbrennstoffzellen bekannt. In diesem Stand der Technik wird ein Material für eine Festoxid-Brennstoffzelle beschrieben, das ein Lanthanmetalloxid mit einer perowskitartigen Kristallstruktur und ein Ceroxid-Metall umfasst.

Ausgehend vom Stand der Technik liegt der Erfindung somit die Aufgabe zugrunde, ein Material für eine Elektrode, insbesondere für eine Luftelektrode für die Hochtemperaturelektrolyse, und ein Verfahren zu seiner Herstellung anzugeben, wobei die Elektrode hinsichtlich Leistung und Lebensdauer verbessert ist im Vergleich zu den aus dem Stand der Technik bekannten Elektroden.

Die Aufgabe wird erfindungsgemäß durch ein Material gemäß Anspruch 1, ein Verfahren gemäß Anspruch 9 und die Verwendungen nach Anspruch 14 gelöst. Vorteilhafte Weiterbildungen der Erfindung finden sich in den Unteransprüchen.

Erfindungsgemäß wird ein Material für eine Elektrode vorgeschlagen, wobei das Material eine Verbindung der Formel (1)

M₂Ni₁₋ₓCoₓO_{4+δ} (1)

und/oder der Formel (2)

La_{1-y}M_{y}Ni₁₋ₓCoₓO_{4+δ} (2)

aufweist oder daraus besteht, wobei M für Pr und/oder Nd steht und 0,0 ≤ x ≤0,2, 0,25 ≤ δ ≤0,3 und 0 < y ≤ 0,5, insbesondere 0,5, bedeutet, wobei das Material weiterhin eine Verbindung der Formel (3) LaNi0.6Fe0.4O3-δ aufweist, wobei 0< δ≤0,5 bedeutet.

Werden solche Materialien in Elektroden, beispielsweise in Luftelektroden für die Hochtemperaturelektrolyse eingesetzt, dann wurde überraschenderweise gefunden, dass die Elektrode hinsichtlich der Leistung und der Lebensdauer verbessert ist. Die Bezeichnung "Luftelektrode" ist auf diesem Gebiet üblich, insbesondere werden als Luftelektroden Elektroden bezeichnet, an denen die Reaktion des Sauerstoffs bei der Hochtemperaturelektrolyse stattfindet. Die Prinzipien der Hochtemperaturelektrolyse sind dem Fachmann bekannt. Sie wurden vorstehende beschrieben. Die erfindungsgemäßen Materialien können in diesen an sich bekannten Hochtemperaturelektrolyseprozessen und -vorrichtungen eingesetzt werden, wodurch die vorstehenden Vorteile erreicht werden.

In einer Ausführungsform weist x die Werte 0,0, 0,1 oder 0,2 auf. In einer weiteren Ausführungsform weist δ die Werte 0,25, 0,28 oder 0,3 auf. Werden erfindungsgemäße Materialien mit diesen Werten für x und δ bereitgestellt, dann werden besonders leistungsverbesserte Elektroden mit besonders langer Lebensdauer erhalten.

In einer Ausführungsform ist das Material ausgewählt ist unter Pr₂NiO_{4+δ}, Pr₂Ni_{0,9}Co_{0,1}O_{4+δ}, Pr₂Ni_{0,8}Co_{0,2}O_{4+δ}, Nd₂NiO_{4+δ}, Nd₂Ni_{0,9}Co_{0,1}O_{4+δ} Nd₂Ni_{0,8}Co_{0,2}O_{4+δ} und La_{1,5}Pr_{0,5}Ni₁₋ₓCoₓO_{4+δ}, wobei x und δ wie vorstehend definiert sind. Diese Materialien sind als Elektroden für die Hochtemperaturelektrolyse besonders geeignet, da sie eine besonders gute Leistungsfähigkeit und Lebensdauer aufweisen.

In einer Ausführungsform weist das Material eine Perowskit-Struktur insbesondere eine geschichtete Perowskit-Struktur auf. Diese Struktur hat sich hinsichtlich Leistungsverbesserung und Lebensdauer als besonders günstig erwiesen. Solche Materialien mit Perowskit-Struktur können mit dem erfindungsgemäßen Verfahren erhalten werden, das nachfolgend beschrieben werden wird.

In einer Ausführungsform weist das Material für eine Elektrode eine mittlere Teilchengröße von 0,5 µm bis 1 µm, beispielsweise 0,8 µm bis 0,9 µm, wie 0,5 µm bis 0,6 µm auf. Die mittlere Teilchengröße kann mittels Teilchengrößenverteilung und Rasterelektronenmikroskopie (SEM) bestimmt werden. Mit diesen mittleren Teilchengrößen werden besonders günstige Elektrodenmaterialien bereitgestellt.

Das erfindungsgemäße Material kann in beliebigen Formen für Elektroden eingesetzt werden. Beispielsweise kann es als Schicht vorliegen. Das Material weist erfindungsgemäß eine Verbindung mit der Formel (3)

*LaNi*_{0,6}*Fe*_{0,4}*O*_{3-*δ*} (3)

auf, wobei 0 < *δ* < 0,05 bedeutet. Diese Verbindung der Formel (3) kann als Schicht auf dem erfindungsgemäßen Material aufgebracht sein. Mit der Verbindung der Formel (3) wird die Stromsammlung verbessert.

Gegenstand der vorliegenden Erfindung ist ferner ein Verfahren zur Herstellung eins Materials für eine Elektrode, wie es vorstehend beschrieben ist, umfassend die Schritte
(a) Mischen der Oxide der Elemente Pr, Nd, Ni, Co, La entsprechend der gewünschten Verbindung der Formel (1) oder (2),
(b) Trocknen des Gemisches aus Schritt (a), und
(c) Tempern des Gemisches bei einer Temperatur von 1000 °C bis
   1400 °C während 4 Stunden bis 20 Stunden unter Luft.

Beispiele der in Schritt (a) eingesetzten Oxide können *Pr₆O*₁₁ bzw. *Nd₂O₃, La₂O₃,* NiO und *Co₃O*₄ sein Diese können getrocknet werden, um darin enthaltenes Wasser weitgehend zu entfernen. Dieses Trocknen kann beispielsweise bei einer Temperatur von etwa 900 °C während beispielsweise 8 Stunden bis 24 Stunden, insbesondre 12 Stunden bis 16 Stunden erfolgen. Das Trockenen kann für jedes eingesetzte Oxid separat erfolgen. Anschließend können die Oxide in entsprechend stöchiometrischen Verhältnissen entsprechend der gewünschten Verbindung der Formeln (1) und (2) gemischt werden. Dies kann in an sich bekannter Weise erfolgen, wie üblicherweise Feststoffe gemischt werden, z.B. mit einer Kugelmühle, insbesondere mit Kugeln aus Zirkonia. Die Geschwindigkeit der Kugelmühle kann 100 bis 250 Umdrehungen pro Minute, beispielsweise etwa 250 Umdrehungen pro Minute betragen. Dies kann währen 2 Stunden bis 6 Stunden, insbesondere etwa 4 Stunden, erfolgen. Ferner kann das Mischen in Gegenwart einer Flüssigkeit erfolgen. Die Flüssigkeit kann als flüssige Phase wirken, in der die Ausgangsmaterialien suspendiert sind, beispielsweise organische flüssige Phasen, wie Isopropanol, Ethanol und/oder Toluol.

Der Trocknungsschritt (b) wird dazu durchgeführt, um die enthaltene Flüssigkeit zu entfernen. In einer Ausführungsform kann das Trocknen in Schritt (b) bei 18 °C bis 100 °C, beispielsweise 70 °C bis 90 °C, wie etwa 80 °C, während 8 Stunden bis 24 Stunden, beispielsweise 10 Stunden bis 14 Stunden, wie etwa 12 Stunden erfolgen.

In einer Ausführungsform kann das Tempern in Schritt (c) bei einer Temperatur von 1100 °C bis 1300 °C, beispielsweise etwa 1300 °C, während etwa 6 Stunden bis 16 Stunden, beispielsweise etwa 12 Stunden erfolgen.

In einer Ausführungsform kann nach Schritt (c) die mittlere Teilchengröße auf 0,5 µm bis 1 µm, beispielsweise 0,8 µm bis 0,9 µm, wie 0,5 µm bis 0,6 µm, z.B. etwa 1 µm eingestellt werden. Die mittlere Teilchengröße kann mittels Teilchengrößenverteilung und Rasterelektronenmikroskopie (SEM) bestimmt werden. Diese Teilchengrößen können mittels üblicher Zerkleinerungsverfahren erhalten werden, beispielsweise Mahlverfahren, insbesondere mit einer Kugelmühle. Die Kugelmühle kann Zirkoniakugeln aufweisen. Das Mahlen kann in Gegenwart einer Flüssigkeit erfolgen. Die Flüssigkeit kann als flüssige Phase wirken, in der die Materialien suspendiert sind, beispielsweise organische flüssige Phasen, wie Isopropanol, Ethanol und/oder Toluol. Das Mahlen kann während 4 Stunden bis 12 Stunden, beispielsweise 6 Stunden bis 10 Stunden, wie etwa 8 Stunden erfolgen. Die Temperatur beim Mahlen kann Raumtemperatur bis 60 °C betragen.

Die so erhaltenen Pulver können mit Flüssigkeiten und Binder zu Pasten verarbeitet werden. Diese können durch Aufbringungstechniken, wie Siebdruck, Foliengießen und Sprühtechniken, auf Halbzellen aufgebracht werden. Halbzellen sind an sich bekannt und käuflich erhältlich. Es handelt sich dabei um eine Elektrode, auf die eine Elektrolytschicht aufgebracht ist. Auf der der bereits vorhandenen Elektrode abgewandten Seite der Elektrolytschicht kann dann die Paste des erfindungsgemäßen Materials für eine Elektrode aufgebracht werden.

Danach kann noch ein Sinterschritt bei z.B. 1100 ° C bis 1200 °C, wie etwa 1150 °C während beispielsweise 0,5 Stunden bis 2 Stunden, wie etwa 1 Stunde, unter Luft durchgeführt werden.

Gegenstand der vorliegenden Erfindung ist ferner die Verwendung des erfindungsgemäßen Materials, wie es vorstehend beschrieben wurde, als Elektrodenmaterial für Brennstoffzellen und für die Elektrolyse, insbesondere für die Hochtemperaturelektrolyse, als Luft- oder Sauerstoffelektrode.

Nachfolgend soll die Erfindung anhand von Beschreibung ohne Beschränkung des allgemeinen Erfindungsgedankens näher erläutert werden. Dabei zeigt
Fig. 1 eine Spannungs-/Spannungsdichtekurven für die Einzelzellen mit PNO-, PNCO10- und PNCO20-Elektroden bei 800 und 900 °C.
Fig. 2 zeigt die Beständigkeit der Einzelzellen PNO, PNCO10 und PNCO20 bei 800 °C und einer Stromdichte von -1 A.cm⁻² mit 50 % H₂ + 50 % H₂O-Gasgemisch.

### Beispiel: Herstellung und elektrochemische Eigenschaften von Elektrodenmaterialien

### Vorbereitung von Materialien und Charakterisierungen:

Drei Zusammensetzungen jeder Serie, nämlich Pr₂Ni₁₋ₓCoₓO_{4+δ} (PNCO), Nd₂Ni₁₋ₓCoₓO_{4+δ} (NNCO) und La_{1,5}Pr_{0,5}Ni₁₋ₓCoₓO_{4+δ} (LPNCO), (x = 0.0, 0.1 und 0.2) wurden nach einem Festkörpersyntheseverfahren hergestellt. Höhere Kobaltgehalte wurde aufgrund der Instabilität des Schichtaufbaus nicht berücksichtigt. Die entsprechenden Vorläufer waren Pr₆O₁₁ (Aldrich chem, 99,9%), La₂O₃ (Aldrich chem, 99,9%), Nd₂O₃ (Alfa Aesar, 99%), NiO (Alfa Aesar, 99%) und Co₃O₄ (Alfa Aesar, 99%). Die Pulver Pr₆O₁₁, Nd₂O₃ und La₂O₃ wurden in einem ersten Schritt bei T = 900 °C über Nacht vorgebrannt, um den Wassergehalt aufgrund ihres hohen hygroskopischen Charakters zu entfernen. Die Vorläufer wurden entsprechend der Zusammensetzung der Nickelate gewogen und anschließend mit Zirkoniumdioxidkugeln und Isopropanol (VWR, 99,8%) für 4 Stunden bei 250 U/min kugelgeschliffen. Nach der Trocknung bei 80 °C über Nacht wurde das Glühen bei 1300 °C während 12 Stunden in Luft durchgeführt, um eine reine Phase zu erhalten. Bei niedrigerer Sintertemperatur wurden einige Verunreinigungen durch die XRD erkannt. Die Sinterbedingungen von 1300 °C/12h ergibt gut kristallisierte Reinphasen. Die erhaltenen Pulver wurden zerkleinert und mit Zirkoniumdioxidkugeln und Isopropanol für 8 h erneut gemahlen, mit dem Ziel, eine mittlere Partikelgröße von ca. 1 µm zu erhalten (überprüft mittels Partikelgrößenverteilung und REM).

Der δ-Wert bei Raumtemperatur unter Luft wurde durch iodometrische Titration und TGA-Experimente ermittelt. Die Pulver wurden zunächst unter Luft auf bis zu 1000 °C ausgewuchtet, dann mit langsamer Geschwindigkeit (2 °C.min⁻¹) auf Raumtemperatur abgekühlt, wobei dieser Zyklus zweimal wiederholt wurde, um einen stabilen Zustand des Materials, d.h. einen reproduzierbaren Sauerstoffgehalt, zu gewährleisten. Anschließend wurde ein zweiter Zyklus unter Ar - 5% H₂-Fluss mit einer sehr langsamen Erwärmungsrate von (0,5 °C.min⁻¹) durchgeführt, wobei die Zersetzung des Materials zur Bestimmung der Sauerstoffstöchiometrie nach dem Zyklisieren der Probe auf Raumtemperatur (La₂O₃, Nd₂O₃, Pr₂O₃, Pr₂O₃, metallisches Ni und Co je nach Zusammensetzung) führte. Für alle Serien wurde ein Anstieg des δ-Wertes bei der Kobaltsubstitution beobachtet. Die erhaltenen δ-Werte sind beispielsweise 0,25, 0,28 und 0,30 für Pr²NiO^{4+δ} (PNO), Pr₂Ni_{0,9}CO_{0,1}O_{4+δ} (PNCO10) bzw. Pr₂Ni_{0,8}Co_{0,2}O_{4+δ} (PNCO20).

### Elektrochemische Leistung und Haltbarkeit als Sauerstoffelektrode:

Die elektrochemische Charakterisierung erfolgte mit NiO-YSZunterstützten Zellen (NiO YSZ///YSZ//GDC///elektrode, CeramTec^{®}, ASC-10C-Typ). Die Sauerstoffelektrode, d.h. die Anodenschichten (Nickelate) wurden im Siebdruckverfahren abgeschieden und bei 1150 °C für 1 h unter Luft gesintert. Die Sintertemperatur (1150 °C) wurde für die PNCO-Serie optimiert, um eine kontrollierte homogene poröse Elektrodenmikrostruktur zu erhalten. Für die Messung wurden Gold- und Nickelgitter (1.024 cm⁻² mesh) als Stromabnehmer für Sauerstoff- bzw. Brennstoffelektrode verwendet. Die i-V-Kennlinie wurde im Elektrolyse-Modus von OCV bis 1,5 V mit einem 50 %igen H₂O- und 50 % H₂-Gasgemisch im Temperaturbereich von 700-900 °C gemessen. Die Impedanzdiagramme wurden bei OCV und von 1,0 auf 1,5 V mit einer Erhöhung von 0,1 V, potentiostatisch gesteuert mit 50 mV Wechselstromamplitude, von 106 Hz auf 10-1 Hz, mit IVIUM VERTEX Potentiostat/Galvanostat mit integriertem Frequenzganganalysemodul aufgenommen.

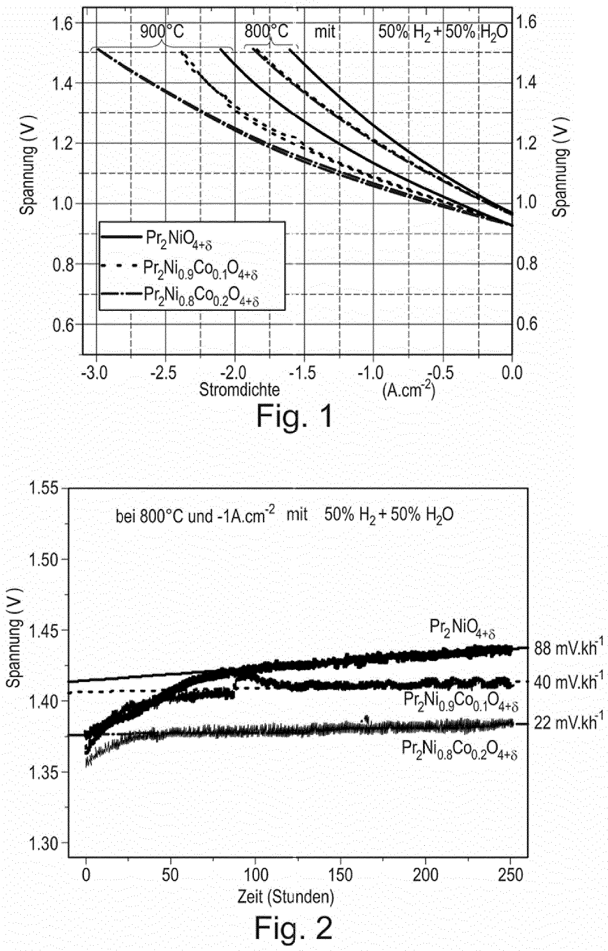

Eine Steigerung der Zellleistung wurde bei der Kobaltsubstitution beobachtet. Die Zellstromdichten, die unter der angelegten Spannung von 1,5 V bei 900 °C erhalten werden, betragen 2,11, 2,41 und 3,0 A.cm⁻² für PNO, PNCO10 und PNCO20 Einzelzellen bzw. bei 800 °C, die Stromdichten 1,6, 1,8 und 1,9 A.cm⁻² für PNO, PNCO10 und PNCO20 Einzelzellen (Fig. 1).

Die Haltbarkeitsexperimente wurden mit den Nickelat-Elektroden, die Einzelzellen enthalten, unter SOEC-Bedingungen bei 800 °C mit hoher Stromdichte durchgeführt, d.h. -1,0 A.cm⁻² bis zu 250 h mit 50 % H₂O und 50 % H₂ (Fig. 2). Alle drei Zellen verhalten sich während des Haltbarkeitstests unterschiedlich und zeigen zunächst einen schnellen Anstieg. Die PNO-Zelle zeigt einen kontinuierlichen Anstieg bis zu 250 h, jedoch ist die Steigerungsrate nach 70-80 h geringer. Die Elektrolyse-Spannung stieg von 1,38 auf 1,43 V für PNO nach 250 h, zeigt den höchsten Gesamtabbau unter allen. Die Degradationsrate wurde geschätzt (in mV.kh⁻¹), indem eine lineare Anpassung im Stabilitätsbereich von Spannung vs. Zeitkurve durchgeführt wurde und für die PNO-Zelle ~88 mV.kh⁻¹ gefunden wurde. Die beiden anderen Zellen weisen jedoch niedrigere Abbauraten auf, d.h. ~ 40 mV.kh⁻¹ bzw. ~22 mV.kh⁻¹, für PNCO10 bzw. PNCO20 Einzelzellen. Bemerkenswert ist, dass die PNCO20-Einzelzelle nach 250 Stunden unter Elektrolysebedingungen den geringsten Abbau aufweist.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus.

## Patentansprüche

1. Material für eine Elektrode, wobei das Material eine Verbindung der Formel (1)
M₂Ni₁₋ₓCoₓO_{4+δ} (1)
und/oder der Formel (2)
La_{1-y}M_{y}Ni₁₋ₓCoₓO_{4+δ} (2)
aufweist oder daraus besteht, wobei M für Pr und/oder Nd steht, 0,0 ≤ x ≤0,2, 0,25 ≤ δ ≤0,3 und 0 < y ≤ 0,5 bedeutet, wobei das Material weiterhin eine Verbindung mit der Formel (3)
LaNi_{0,6}Fe_{0,4}O_{3-δ} (3)
aufweist, wobei 0 < δ ≤ 0,05 bedeutet.

2. Material nach Anspruch 1, wobei x die Werte 0,0, 0,1 oder 0,2 aufweist.

3. Material nach einem der vorhergehenden Ansprüche, wobei δ die Werte 0,25, 0,28 oder 0,3 aufweist

4. Material nach einem der vorhergehenden Ansprüche, wobei es ausgewählt ist unter Pr₂NiO_{4+δ}, Pr₂Ni_{0,9}Co_{0,1}O_{4+δ}, Pr₂Ni_{0,8}Co_{0,2}O_{4+δ}, Nd₂NiO_{4+δ}, Nd₂Ni_{0,9}Co_{0,1}O_{4+δ} Nd₂Ni_{0,8}Co_{0,2}O_{4+δ} und La_{1,5}Pr_{0,5}Ni₁₋ₓCoₓO_{4+δ}, wobei x und δ wie in Anspruch 1-3 definiert sind.

5. Material nach einem der vorhergehenden Ansprüche, wobei das Material eine Perowskit-Struktur aufweist.

6. Material nach Anspruch 5, wobei das Material eine geschichtete Perowskit-Struktur aufweist.

7. Material nach einem der vorhergehenden Ansprüche, wobei es eine mittlere Teilchengröße von 0,5 µm bis 1 µm, beispielsweise 0,8 µm bis 0,9 µm, wie 0,5 µm bis 0,6 µm aufweist.

8. Verfahren zur Herstellung eins Materials für eine Elektrode, nach einem der Ansprüche 1 bis 7, umfassend die Schritte
(a) Mischen der Oxide der Elemente Pr, Nd, Ni, Co, La entsprechend der gewünschten Verbindung der Formel (1) oder (2),
(b) Trocknen des Gemisches aus Schritt (a),
(c) Tempern des Gemisches bei einer Temperatur von 1000 °C bis 1400 °C während 4 Stunden bis 20 Stunden unter Luft.

9. Verfahren nach Anspruch 8, wobei das Mischen der Oxide in Schritt (a) unter Verwendung einer Kugelmühle in Gegenwart einer Flüssigkeit während 2 bis 6 Stunden, beispielsweise 3 bis 5 Stunden, wie etwa 4 Stunden, erfolgt.

10. Verfahren nach Anspruch 8 oder 9, wobei das Trocknen in Schritt (b) bei 18 °C bis 100 °C, beispielsweise 70 °C bis 90 °C, wie etwa 80 °C, während 8 Stunden bis 24 Stunden, beispielsweise 10 Stunden bis 14 Stunden, wie etwa 12 Stunden erfolgt.

11. Verfahren nach einem der Ansprüche 8 bis 10, wobei das Tempern in Schritt (c) bei einer Temperatur von etwa 1300 °C während etwa 12 Stunden erfolgt.

12. Verfahren nach einem der Ansprüche 8 bis 11, wobei nach Schritt (c) die mittlere Teilchengröße auf 0,5 µm bis 1 µm, beispielsweise 0,8 µm bis 0,9 µm, wie 0,5 µm bis 0,6 µm, insbesondere 1 µm eingestellt wird.

13. Verwendung des Materials nach einem der Ansprüche 1 bis 7 als Elektrodenmaterial.

14. Verwendung nach Anspruch 13, wobei die Elektrode eine Luftelektrode oder Sauerstoffelektrode für eine Brennstoffzelle oder die Elektrolyse ist, insbesondere für die Hochtemperaturelektrolyse.

## Claims

1. Material for an electrode, wherein the material includes or consists of a compound of the formula (1)
M₂Ni₁₋ₓCoₓO_{4+δ} (1)
and/or of the formula (2)
La_{1-y}M_{y}Ni₁₋ₓCoₓO_{4+δ} (2)
where M is Pr and/or Nd, 0.0 ≤ x ≤0.2, 0.25 ≤ δ ≤0.3 and 0 < y ≤ 0.5, wherein the material also includes a compound having the formula (3)
LaNi_{0.6}Fe_{0.4}O_{3-δ} (3)
where 0 < δ ≤ 0.05.

2. Material according to Claim 1, where x has the values of 0.0, 0.1 or 0.2.

3. Material according to either of the preceding claims, where δ has the values of 0.25, 0.28 or 0.3.

4. Material according to any of the preceding claims, selected from Pr₂NiO_{4+δ}, Pr₂Ni_{0.9}Co_{0.1}O_{4+δ}, Pr₂Ni_{0.8}Co_{0.2}O_{4+δ}, Nd₂NiO_{4+δ}, Nd₂Ni_{0.9}Co_{0.1}O_{4+δ} Nd₂Ni_{0.8}Co_{0.2}O_{4+δ} and La_{1.5}Pr_{0.5}Ni₁₋ₓCoₓO_{4+δ}, where x and δ are defined as in Claims 1-3.

5. Material according to any of the preceding claims, wherein the material has a perovskite structure.

6. Material according to Claim 5, wherein the material has a layered perovskite structure.

7. Material according to any of the preceding claims, having an average particle size of 0.5 µm to 1 µm, for example 0.8 µm to 0.9 µm, such as 0.5 µm to 0.6 µm.

8. Method of producing a material for an electrode according to any of Claims 1 to 7, comprising the steps of
(a) mixing the oxides of the elements Pr, Nd, Ni, Co, La according to the desired compound of the formula (1) or (2),
(b) drying the mixture from step (a),
(c) subjecting the mixture to heat treatment at a temperature of 1000°C to 1400°C for 4 hours to 20 hours under air.

9. Method according to Claim 8, wherein the oxides are mixed in step (a) using a ball mill in the presence of a liquid for 2 to 6 hours, for example 3 to 5 hours, such as about 4 hours.

10. Method according to Claim 8 or 9, wherein the drying in step (b) is effected at 18°C to 100°C, for example 70°C to 90°C, such as about 80°C, for 8 hours to 24 hours, for example 10 hours to 14 hours, such as about 12 hours.

11. Method according to any of Claims 8 to 10, wherein the heat treatment in step (c) is effected at a temperature of about 1300°C for about 12 hours.

12. Method according to any of Claims 8 to 11, wherein the mean particle size after step (c) is adjusted to 0.5 µm to 1 µm, for example 0.8 µm to 0.9 µm, such as 0.5 µm to 0.6 µm, in particular 1 µm.

13. Use of the material according to any of Claims 1 to 7 as electrode material.

14. Use according to Claim 13, wherein the electrode is an air electrode or oxygen electrode for a fuel cell or electrolysis, in particular for high-temperature electrolysis.

## Revendications

1. Matériau pour une électrode, le matériau présentant ou étant constitué par un composé de formule (1)
M₂Ni₁₋ₓCoₓO_{4+δ} (1)
et/ou de formule (2)
La_{1-y}M_{y}Ni₁₋ₓCoₓO_{4+δ} (2)
dans lesquelles M représente Pr et/ou Nd, 0,0 ≤ x ≤ 0,2, 0,25 ≤ δ ≤ 0,3 et 0 < y ≤ 0,5, le matériau présentant en outre un composé de formule (3)
LaNi_{0,6}Fe_{0,4}O_{3-δ} (3)
dans laquelle 0 < δ ≤ 0,05.

2. Matériau selon la revendication 1, x présentant les valeurs 0,0, 0,1 ou 0,2.

3. Matériau selon l'une des revendications précédentes, δ présentant les valeurs 0,25, 0,28 ou 0,3.

4. Matériau selon l'une des revendications précédentes, ledit matériau étant choisi parmi Pr₂NiO_{4+δ}, Pr₂Ni_{0,9}Co_{0,1}O_{4+δ}, Pr₂Ni_{0,8}Co_{0,2}O_{4+δ}, Nd₂NiO_{4+δ}, Nd₂Ni_{0,9}Co_{0,1}O_{4+δ}, Nd₂Ni_{0,8}Co_{0,2}O_{4+δ} et La_{1,5}Pr_{0,5}Ni₁₋ₓCoₓO_{4+δ}, x et δ étant définis comme dans les revendications 1-3.

5. Matériau selon l'une des revendications précédentes, le matériau présentant une structure de pérovskite.

6. Matériau selon la revendication 5, le matériau présentant une structure de pérovskite à couches.

7. Matériau selon l'une des revendications précédentes, ledit matériau présentant une grosseur moyenne de particule de 0,5 µm à 1 µm, par exemple de 0,8 µm à 0,9 µm, comme 0,5 µm à 0,6 µm.

8. Procédé de préparation d'un matériau pour une électrode, selon l'une des revendications 1 à 7, comprenant les étapes
(a) mélange des oxydes des éléments Pr, Nd, Ni, Co, La conformément au composé souhaité de formule (1) ou (2),
(b) séchage du mélange de l'étape (a),
(c) traitement thermique du mélange à une température de 1000°C à 1400°C pendant 4 heures jusqu'à 20 heures sous air.

9. Procédé selon la revendication 8, le mélange des oxydes dans l'étape (a) ayant lieu à l'aide d'un broyeur à billes en présence d'un liquide pendant 2 à 6 heures, par exemple pendant 3 à 5 heures, comme pendant environ 4 heures.

10. Procédé selon la revendication 8 ou 9, le séchage dans l'étape (b) ayant lieu à 18°C jusqu'à 100°C, par exemple à 70°C jusqu'à 90°C, comme à environ 80°C, pendant 8 heures à 24 heures, par exemple pendant 10 heures à 14 heures, comme pendant environ 12 heures.

11. Procédé selon l'une des revendications 8 à 10, le traitement thermique dans l'étape (c) ayant lieu à une température d'environ 1300°C pendant environ 12 heures.

12. Procédé selon l'une des revendications 8 à 11, la grosseur moyenne de particule étant réglée, après l'étape (c), à 0,5 µm jusqu'à 1 µm, par exemple à 0,8 µm jusqu'à 0,9 µm, comme à 0,5 µm jusqu'à 0,6 µm, en particulier à 1 µm.

13. Utilisation du matériau selon l'une des revendications 1 à 7 comme matériau d'électrode.

14. Utilisation selon la revendication 13, l'électrode étant une électrode à air ou une électrode à oxygène pour une pile à combustible ou l'électrolyse, en particulier pour l'électrolyse à haute température.
